# EUROPÄISCHE PATENTSCHRIFT

(11) **EP 3 318 451 B1**
(45) Veröffentlichungstag und Bekanntmachung des Hinweises auf die Patenterteilung: **10.07.2019**
(21) Anmeldenummer: 17199623.4
(22) Anmeldetag: 02.11.2017
(51) Int. Cl.: B60R 21/16, B60R 21/231

(54) **GASSACK, VERFAHREN ZUR HERSTELLUNG EINES GASSACKS, GASSACKMODUL UND FAHRZEUGSICHERHEITSSYSTEM**
AIRBAG, METHOD FOR PRODUCING AN AIRBAG, AIRBAG MODULE AND VEHICLE SAFETY SYSTEM
COUSSIN GONFLABLE, PROCÉDÉ DE FABRICATION D'UN COUSSIN GONFLABLE, MODULE DE COUSSIN GONFLABLE ET SYSTÈME DE SÉCURITÉ DE VÉHICULE

(30) Priorität: 03.11.2016 DE 202016106157 U
(43) Veröffentlichungstag der Anmeldung: 09.05.2018
(73) Patentinhaber: Dalphi Metal España, S.A., 36213 Vigo (ES)
(72) Erfinder: Castro Sepúlveda, Maria de Fátima, 4700-749 Palmeira (PT); Cuerva Ferreira, Christophe Manuel, 4950-850 Moncao (PT); de Sousa Monteiro, Tiago Miguel, 4980-283 Cuide de Vila Verde (PT)
(74) Vertreter: ZF TRW Patentabteilung

(56) Entgegenhaltungen:
- DE-A1-102007 000 116
- DE-A1-102007 032 763
- DE-A1-102013 012 017
- DE-A1-102013 207 295
- US-A1- 2011 241 317

## Beschreibung

Die Erfindung betrifft einen Gassack, umfassend mindestens ein Gassackpanel und mindestens ein Verstärkungspanel, wobei das Verstärkungspanel mit dem Gassackpanel verbunden, insbesondere vernäht, ist. Außerdem betrifft die Erfindung ein Verfahren zur Herstellung eines erfindungsgemäßen Gassacks. Daneben betrifft die Erfindung ein Gassackmodul mit einem erfindungsgemäßen Gassack. Ferner betrifft die Erfindung ein Fahrzeugsicherheitssystem, insbesondere ein Seiten-Airbagsystem, besonders bevorzugt ein Front-Seiten-Airbagsystem, mit einem erfindungsgemäßen Gassack.

Aus DE 10 2007 000 116 A1 ist beispielsweise ein Airbag bekannt, der zwei Verstärkungsstoffe zum Verstärken der Umgebung des Gaseinlassanschlusses aufweist. Mindestens ein Verstärkungsstoff ist dazu geeignet, um einen allgemeinen Gesamtbereich der Innenflächen des unteren Teils eines Grundstoffs abzudecken. Ein weiterer Verstärkungsstoff hat eine im Allgemeinen rechteckige Form zum Verstärken der Umgebung des Gaseinlassanschlusses.

In der DE 2007 032 763 A1 ist ein Airbagsystem mit einem textilen Basisflächenverbund und einem textilen Verstärkungsflächenverbund beschrieben, wobei die beiden textilen Flächenverbunde übereinandergelegt und miteinander vernäht sind, wobei eine Gaseinlassöffnung sowie Montage- und Durchgangslöcher vorgesehen sein können, welche sich jeweils durch die beiden textilen Flächenverbunde erstrecken.

Die DE 10 2013 012 017 A1 offenbart einen Gassack gemäß dem Oberbegriff des Anspruchs 1 und betrifft die Befestigung eines Fangbands an einem Airbagmaterial eines Airbags, wobei das innenliegende Fangband beim Aufblasen des Airbags dessen Entfaltungsgeometrie in gewünschter Weise beeinflussen soll. Das Fangband oder eine Befestigungslage des Fangbands kann hierbei einen Entlastungsschlitz aufweisen, um der Verbindung zwischen dem Fangband und dem Airbagmaterial eine größere Elastizität zu verleihen.

Bei manchen Gassackpanels ist zu beobachten, dass beim Aufblasen des Airbags der Airbag-Grundstoff an seiner Naht mit dem Verstärkungsstoff einreißt. Ein derartiges Einreißen der Naht ist insofern nachteilig, als dass der Airbag beispielsweise nicht gleichmäßig aufgeblasen wird oder aus dem Airbag vorzeitig Gas entweichen kann.

Die Aufgabe der vorliegenden Erfindung ist es, einen Gassack anzugeben, der mindestens ein Gassackpanel und mindestens ein Verstärkungspanel umfasst, wobei das Verstärkungspanel mit dem Gassackpanel verbunden, insbesondere vernäht, ist, wobei die Gefahr des Aufreißens der Verbindungsnaht verringert, vorzugsweise verhindert wird. Außerdem besteht die Aufgabe darin, ein Verfahren zur Herstellung eines erfindungsgemäßen Gassacks anzugeben. Ferner besteht die Aufgabe darin, ein Gassackmodul mit einem weiterentwickelten Gassack anzugeben. Ferner besteht die Aufgabe darin, ein Fahrzeugsicherheitssystem, insbesondere ein Seiten-Airbagsystem, besonders bevorzugt ein Front-Seiten-Airbagsystem, mit einem weiterentwickelten Gassack anzugeben.

Erfindungsgemäß wird diese Aufgabe im Hinblick auf den Gassack durch den Gegenstand des Anspruchs 1, im Hinblick auf das Verfahren zur Herstellung eines Gassacks durch den Gegenstand des Anspruchs 11, im Hinblick auf das Gassackmodul durch den Gegenstand des Anspruchs 9 und im Hinblick auf das Fahrzeugsicherheitssystem durch den Gegenstand des Anspruchs 10 gelöst.

Zur Lösung der eingangs genannten Aufgabe sieht die Erfindung einen Gassack vor, der mindestens ein Gassackpanel und mindestens ein Verstärkungspanel umfasst. Das Verstärkungspanel ist mit dem Gassackpanel verbunden, insbesondere vernäht.

Erfindungsgemäß ist lediglich im Verstärkungspanel, nicht jedoch im Gassackpanel, in einem Abstand zu mindestens einer Verbindungsstelle, insbesondere im Abstand zu einer Naht, des Verstärkungspanels mit dem Gassackpanel mindestens eine Entlastungsaussparung, insbesondere mindestens ein Entlastungseinschnitt, ausgebildet.

Das Gassackpanel kann auch als Gassackstoff oder Gassackgrundstoff bezeichnet werden. Bei dem Verstärkungspanel kann es sich um einen Verstärkungsstoff handeln. Insbesondere ist das Verstärkungspanel mit dem Gassackpanel im zu verstärkenden Bereich mit dem Gassack verbunden. Als zu verstärkender Bereich ist beispielsweise eine Gaseinlassöffnung zu verstehen. Auch der Bereich des Gassacks, der mit einer Montageplatte verbunden ist, kann beispielsweise zu verstärken sein.

Es ist möglich, dass das Gassackpanel und das Verstärkungspanel aus einem gleichen Stoff gebildet sind. Des Weiteren ist es möglich, dass das Verstärkungspanel aus einem stärkerem, d.h. mechanisch belastbarerem, Stoff gebildet ist. Das Verstärkungspanel ist mit dem Gassackpanel verbunden. Vorzugsweise ist das Verstärkungspanel mit dem Gassackpanel vernäht. Des Weiteren ist es denkbar, dass das Verstärkungspanel mit dem Gassackpanel verschweißt ist. Auch eine Kombination aus Verschweißen und Vernähen ist möglich.

Am Verstärkungspanel ist somit mindestens eine Verbindungsstelle ausgebildet, an der das Verstärkungspanel mit dem Gassackpanel verbunden ist. Es ist möglich, dass mehrere Verbindungsstellen ausgebildet sind. Außerdem kann die Verbindungsstelle als zusammenhängende Verbindungsstelle ausgebildet sein. In diesem Fall ist beispielsweise eine vollständig umlaufende Verbindungsnaht bzw. Verbindungsschweißnaht ausgebildet.

Das Verstärkungspanel ist vorzugsweise auf der Seite des Gassackpanels angeordnet bzw. auf der Seite mit dem Gassackpanel verbunden, die in einem Gassack innenliegend ausgebildet ist. D.h. im Aktivierungsfall ist das Verstärkungspanel innerhalb des Gassacks ausgebildet.

Durch das Ausbilden einer Entlastungsaussparung kann das Verstärkungspanel im Aktivierungsfall stärker gedehnt werden. Vorzugsweise wird ein Verlängerungsbereich im Verstärkungspanel gebildet, der stärker gedehnt werden kann. Diese stärkere Dehnung bewirkt, dass die Verbindungsstelle, insbesondere die (Verbindungs-)naht, nicht reißt. Das Verstärkungspanel ist aufgrund der erfindungsgemäßen Ausbildung mindestens einer Entlastungsaussparung mechanisch besser belastbar. Ein Auftrennen bzw. Zerstören der Verbindungsstelle wird verhindert. Als Entlastungsaussparung ist insbesondere ein Entlastungseinschnitt oder ein Entlastungsschnitt zu verstehen. Das Verstärkungspanel ist im Bereich der Entlastungsaussparung geschwächt. Das Verstärkungspanel ist in diesem Bereich bzw. Abschnitt aufgetrennt.

Die mindestens eine Entlastungsaussparung kann durch Schneiden und/oder Stanzen gebildet werden. Vorzugsweise weist die Entlastungsaussparung eine längliche Form auf. Insbesondere handelt es sich bei der Entlastungsaussparung um einen länglichen Schnitt. Die Entlastungsaussparung ist vorzugsweise länger als breit. D.h., dass die Schnittlänge länger als die Schnittbreite ist.

Vorzugsweise weist das Verstärkungspanel mehrere Entlastungsaussparungen auf. Vorzugsweise sind diese Entlastungsaussparungen in mindestens einer Reihe angeordnet. Mit anderen Worten umfasst das Verstärkungspanel in einem Abstand zu mindestens einer Verbindungsstelle des Verstärkungspanels mit dem Gassackpanel mehrere in Reihe angeordnete Entlastungsaussparungen, insbesondere Entlastungseinschnitte.

Vorzugsweise ist der Abstand zwischen den einzelnen Entlastungsaussparungen gleich groß ausgebildet. Des Weiteren ist es möglich, dass die mindestens eine Entlastungsaussparung als längliches Loch und/oder halbmondförmig und/oder halbrund und/oder oval und/oder quadratisch und/oder rechteckig ausgebildet ist. Es ist möglich, dass mehrere im Verstärkungspanel ausgebildete Entlastungsaussparungen unterschiedliche Formen aufweisen.

Die Entlastungsaussparrungen, insbesondere die in einer Reihe angeordneten Entlastungsaussparungen, können parallel zur Verbindungsstelle ausgebildet sein. Sofern lediglich eine Entlastungsaussparung ausgebildet ist, verläuft die Erstreckung der Entlastungsaussparung, insbesondere des Entlastungseinschnitts, vorzugsweise parallel zur Verbindungsstelle.

In einer besonders bevorzugten Ausführungsform der Erfindung sind im Verstärkungspanel mindestens zwei Reihen mit Entlastungsaussparungen, insbesondere mit Entlastungseinschnitten, ausgebildet. Diese Entlastungseinschnitte der mindestens zwei Reihen können alle die gleiche Form aufweisen. Mit anderen Worten können die Entlastungseinschnitte der mindestens zwei Reihen jeweils die gleiche Länge aufweisen. Alternativ ist denkbar, dass in einer Reihe Entlastungsaussparungen mit einer ersten Geometrie und in der vorzugsweise mindestens zweiten Reihe Entlastungsaussparungen mit einer zweiten Geometrie ausgebildet sind.

Vorzugsweise verlaufen die mindestens zwei Reihen von Entlastungsaussparungen parallel zueinander. Als parallel zueinander verlaufend wird im Rahmen der vorliegenden Anmeldung für die jeweiligen Merkmale vorausgesetzt, dass kleinere Abweichungen von einer parallelen Ausrichtung ebenfalls erfindungsgemäß umfasst sind.

Des Weiteren ist es möglich, dass die zwei Reihen mit Entlastungsaussparungen, insbesondere mindestens zwei Reihen mit Entlastungseinschnitten parallel zur Verbindungsstelle verlaufen. Mit anderen Worten können die Verbindungsstelle sowie die mindestens zwei Reihen mit Entlastungsaussparungen parallel zueinander verlaufen.

Des Weiteren ist es möglich, dass die Entlastungsaussparungen einer ersten Reihe versetzt zu den Entlastungsaussparungen einer zweiten Reihe verlaufen bzw. versetzt zu den Entlastungsaussparungen einer zweiten Reihe angeordnet sind. Als versetzte Anordnung ist eine derartige Anordnung zu verstehen, dass beispielsweise in paralleler Anordnung zur ersten Reihe auf Höhe der Entlastungsaussparungen der ersten Reihe in der zweiten Reihe Verbindungsabschnitte von Entlastungsaussparungen der zweiten Reihe ausgebildet sind. Wiederum sind auf Höhe von Verbindungsabschnitten von Entlastungsaussparungen der ersten Reihe in der zweiten Reihe Entlastungsaussparungen ausgebildet. Die Entlastungsaussparungen der zweiten Reihe können die Verbindungsabschnitte zwischen den Entlastungsaussparungen der ersten Reihe überlappen.

In einer weiteren Ausführungsform der Erfindung ist die Verbindungsstelle, insbesondere die Verbindungsnaht oder die Verbindungsschweißnaht, parallel zu einem Faltungsabschnitt des Gassackpanels, ausgebildet. Mit anderen Worten verläuft die Verbindungsstelle parallel zu einem Faltungsabschnitt des Gassacks, insbesondere parallel zu einem Faltungsabschnitt des Gassackpanels. Dies bewirkt eine besonders gute mechanische Wirkungsweise der Entlastungsaussparungen, insbesondere der Entlastungseinschnitte, da im Abstand zu dem Faltungsabschnitt des Gassacks, insbesondere im Abstand zu dem Faltungsabschnitt des Gassackpanels, entsprechend hohe Dehnungskräfte wirken.

Im Aktivierungsfall wird die mindestens eine Entlastungsaussparung vergrößert. Sofern mehrere Entlastungsaussparungen ausgebildet sind, werden diese Entlastungsaussparungen vergrößert. Aufgrund der zwischen den Entlastungsaussparungen ausgebildeten Verbindungsabschnitte wird das Verstärkungspanel nicht zerrissen bzw. das Verstärkungspanel reißt nicht. Die Verbindungsabschnitte zwischen den Entlastungsaussparungen werden im Aktivierungsfall verlängert, so dass das Verstärkungspanel insgesamt verlängert wird. Demnach wirkt auf die mindestens eine Verbindungsstelle eine geringere Kraft, so dass die Verbindungsstelle, insbesondere die Verbindungsnaht nicht reißt. Das Gassackpanel wird ebenfalls im Aktivierungsfall nicht zerrissen.

Zwischen einer ersten Reihe und einer zweiten Reihe mit Entlastungsaussparungen ist vorzugsweise ein Abstandsbereich ausgebildet, der keine Entlastungsaussparungen aufweist. Der Abstandsbereich, die erste Reihe und die zweite Reihe bilden vorzugsweise einen Verlängerungsbereich. Im Verlängerungsbereich kann im Aktivierungsfall des Gassacks eine Verlängerung des Stoffes des Verstärkungspanels stattfinden. Dadurch wird die Last auf die Verbindungsstelle verringert. Die Verbindungsstelle reißt demnach im Aktivierungsfall nicht ein.

Im Gassackpanel sind keine Entlastungsaussparungen ausgebildet. Der erfindungsgemäße Gassack ist dadurch gekennzeichnet, dass lediglich im Verstärkungspanel mindestens eine Entlastungsaussparung, vorzugsweise mehrere Entlastungsaussparungen, die insbesondere in mindestens zwei Reihen angeordnet sind, ausgebildet ist/sind.

Die Performance des erfindungsgemäßen Gassacks ist im Vergleich zu Gassäcken ohne Entlastungsaussparung(en) erhöht. Es ist möglich, dass einzelne oder alle Verbindungsabschnitte zwischen den Entlastungsaussparungen im Aktivierungsfall reißen. Ein vollständiges Reißen des Verstärkungspanels wird allerdings aufgrund der Entlastungsaussparungen vermieden.

In einer (ersten) Reihe mit Entlastungsaussparungen können mindestens fünf, insbesondere mindestens sechs, insbesondere mindestens sieben, insbesondere mindestens acht, insbesondere mindestens neun, Entlastungsaussparungen ausgebildet sein. Vorzugsweise weist die erste Reihe mit Entlastungsaussparungen mehr Entlastungsaussparungen auf als die zweite Reihe mit Entlastungsaussparungen auf. In der zweiten Reihe von Entlastungsaussparungen können mindestens vier, insbesondere mindestens fünf, insbesondere mindestens sechs, insbesondere mindestens sieben, insbesondere mindestens acht, Entlastungsaussparungen ausgebildet sein. Als erste Reihe mit Entlastungsaussparungen ist die zur Verbindungsstelle nächstgelegene Reihe zu verstehen. Mit anderen Worten weist die erste Reihe einen geringeren Abstand zur Verbindungsstelle auf, als die zweite Reihe.

In einer besonders bevorzugten Ausführungsform der Erfindung weist die erste Reihe acht Entlastungsaussparungen auf. Die zweite Reihe weist besonders bevorzugt sieben Entlastungsaussparungen auf.

Mit Hilfe des erfindungsgemäßen Gassacks ist es möglich, einen hinsichtlich der Belastbarkeit weiterentwickelten Gassack zur Verfügung zu stellen, der keine erhöhten Herstellungskosten bedingt. Da der Gassack aus der gleichen Anzahl von Panels und aus gleich großen Stoffpanels wie bekannte Gassäcke besteht, sind auch keine erhöhten Materialkosten in Kauf zu nehmen. Der erfindungsgemäße Gassack kann in der gleichen Art und Weise zusammengelegt, d.h. zusammengefaltet und/oder zusammengerollt werden, wie dies bei bisherigen Gassäcken ohne Entlastungsaussparungen bekannt ist. Die zuständigen Mitarbeiter müssen demnach keine zusätzlichen Verfahrensschritte hinsichtlich des Zusammenlegens des Gassacks erlernen. Außerdem kann die beschriebene Ausbildung eines erfindungsgemäßen Gassacks auf eine Vielzahl von Gassackarten angewandt werden.

Der Gassack kann insbesondere als Thoraxairbag, Knieairbag, Fahrerfrontairbag, Beifahrerfrontairbag, Seitenkopfairbag, oder Far-Side-airbag ausgebildet sein.

Ein nebengeordneter Aspekt beruht auf einem Verfahren zur Herstellung eines erfindungsgemäßen Gassacks. Das Verfahren ist durch folgende Verfahrensschritte gekennzeichnet:
a) Einbringen, insbesondere Einschneiden, mindestens einer Entlastungsaussparung, insbesondere mindestens eines Entlastungseinschnitts, lediglich in das Verstärkungspanel, nicht jedoch in das Gassackpanel,
b) Verbinden, insbesondere Vernähen, des Verstärkungspanels mit dem Gassackpanel,
c) Verbinden, insbesondere Vernähen, von Abschnitten des Gassackpanels.

In einem ersten erfindungsgemäßen Schritt wird in das Verstärkungspanel, das vorzugsweise bereits hinsichtlich der äußeren Geometrie auf die korrekten Endabmaße gebracht ist, mindestens eine Entlastungsaussparung eingebracht. Vorzugsweise wird die mindestens eine Entlastungsaussparung, insbesondere der mindestens eine Entlastungseinschnitt, in das Verstärkungspanel eingeschnitten bzw. geschnitten. Dies kann beispielsweise mittels Laserschneidens durchgeführt werden. Alternativ ist es möglich, dass mindestens eine Entlastungsaussparung in das Verstärkungspanel eingestanzt wird. Alternativ ist es des Weiteren hinsichtlich des
Schritts a) möglich, einen Abschnitt des Verstärkungspanels auszustanzen, so dass eine Entlastungsaussparung gebildet wird.

Im nachgelagerten Schritt b) wird das Verstärkungspanel mit dem Gassackpanel verbunden, insbesondere vernäht. Alternativ ist es denkbar, dass das Verstärkungspanel mit dem Gassackpanel verschweißt, insbesondere mittels Laser verschweißt, wird.

Anschließend werden Abschnitte des Gassackpanels miteinander verbunden, insbesondere vernäht, so dass die Endform des Gassacks hergestellt wird.

Des Weiteren ist es in einem Schritt d) möglich, dass das Gassackpanel zusammen mit dem Verstärkungspanel zusammengelegt, insbesondere gefaltet und/oder eingerollt wird.

Die Schritte a) bis d) werden vorzugsweise in der aufgeführten Reihenfolge durchgeführt. Es ist möglich, dass zwischen den Schritten a) bis d) weitere Schritte durchgeführt werden.

Im Rahmen eines weiteren nebengeordneten Aspekts beruht die Erfindung auf dem Gedanken, ein Gassackmodul anzugeben, wobei das Gassackmodul einen erfindungsgemäßen Gassack aufweist und einer Strömungsmittelquelle zum Aufblasen des Gassackes und eine Strömungsmittelquelle zum Aufblasen des Gassackes.

Das Gassackmodul, insbesondere ein Seiten-Airbagmodul, umfasst vorzugsweise einen zusammengelegten erfindungsgemäßen Gassack und einen Gasgenerator zum Aufblasen des Gassacks.

Es ergeben sich ähnliche Vorteile, wie diese bereits im Zusammenhang mit dem eingangs beschriebenen erfindungsgemäßen Gassack erläutert wurden.

In einem weiteren nebengeordneten Aspekt betrifft die Erfindung ein Fahrzeugsicherheitssystem, insbesondere ein Seiten-Airbagsystem, besonders bevorzugt ein Front-Seiten-Airbagsystem, mit einem erfindungsgemäßen Gassack und/oder mit einem erfindungsgemäßen Gassackmodul. Demnach weist ein erfindungsgemäßes Fahrzeugsicherheitssystem mindestens einen erfindungsgemäßen Gassack und/oder mindestens ein erfindungsgemäßes Gassackmodul auf. Weiterhin weist das Fahrzeugsicherheitssystem zumindest eine Sensoreinheit zum Erfassen von Daten sowie eine elektronische Entscheidungseinheit auf, die geeignet ist, unter Einbeziehung der von der Sensoreinheit erfassten Daten das Vorliegen eines Auslösefalles für das Gassackmodul zu definieren und/ oder ein Auslösesignal an das Gassackmodul zu senden. Bei einem Front-Seiten-Airbagsystem handelt es sich um einen Seitenairbag, der in der ersten Sitzreihe, d.h. auf Höhe des Fahrers und/oder des Beifahrers ausgebildet ist. Es ergeben sich ähnliche Vorteile, wie diese bereits im Zusammenhang mit dem eingangs beschriebenen Gassack und/oder mit dem erfindungsgemäßen Gassackmodul erläutert wurden.

Die Erfindung wird im Folgenden anhand von Ausführungsbeispielen unter Bezugnahme auf die beigefügten, schematischen Zeichnungen näher erläutert. Weitere Merkmale und Vorteile der Erfindung ergeben sich aus der nachfolgenden Beschreibung in Verbindung mit diesen Zeichnungen.

Darin zeigen:
- Fig. 1:: einen erfindungsgemäßen Gassack;
- Fig. 2a:: eine Detailansicht des Verstärkungspanels;
- Fig. 2b:: einen Querschnitt durch den erfindungsgemäßen Gassack; und
- Figuren 3a und 3b:: Darstellungen eines erfindungsgemäßen Gassacks nach Aktivierung.

Im Folgenden werden für gleiche und gleichwirkende Teile gleiche Bezugsziffern verwendet.

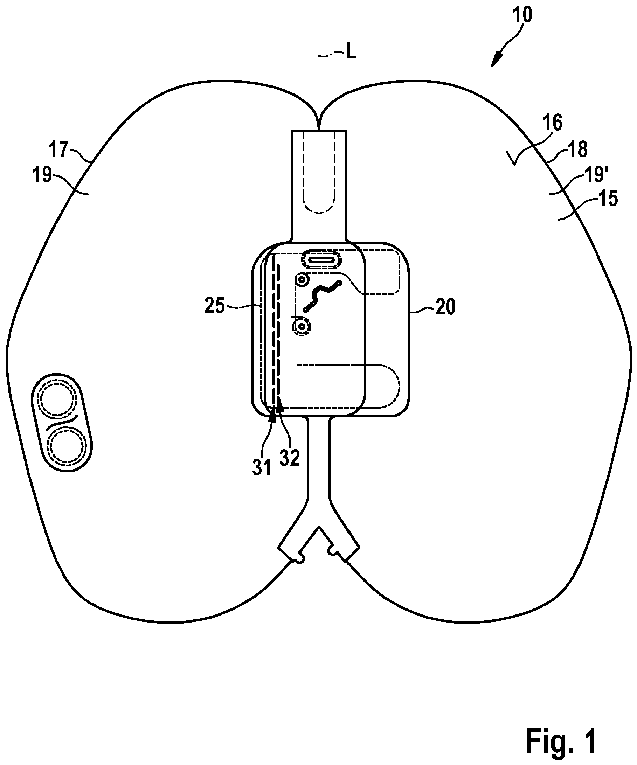

In Fig. 1 wird ein erfindungsgemäßer Gassack 10 dargestellt. Dieser Gassack 10 umfasst ein Gassackpanel 15 und ein Verstärkungspanel 20. In Fig. 1 ist eine Darstellung auf die Innenseite 16 des Gassacks bzw. des Gassackpanels 15 dargestellt. D.h., dass diese Innenseite 16 im zusammengelegten und zusammengenähten Zustand des Gassacks 10 nicht mehr zu sehen ist. Das Gassackpanel 15 wird zum Herstellen eines Gassacks 10 derart gefaltet, dass beispielsweise die Seitenkante 17 auf der Seitenkante 18 zu liegen kommt. Die Seitenkanten 17 und 18 werden zur Herstellung des Gassacks miteinander verbunden, insbesondere miteinander vernäht. Das Gassackpanel 15 weist zwei nierenförmige Abschnitte 19 und 19' auf. Das Gassackpanel 15 ist mit anderen Worten zur Längsachse L spiegelsymmetrisch ausgebildet.

Mittig des Gassackpanels 15 und teilweise auf der Längsachse L liegend ist ein Verstärkungspanel 20 angebracht. Dieses ist mit dem Gassackpanel 15 vernäht.

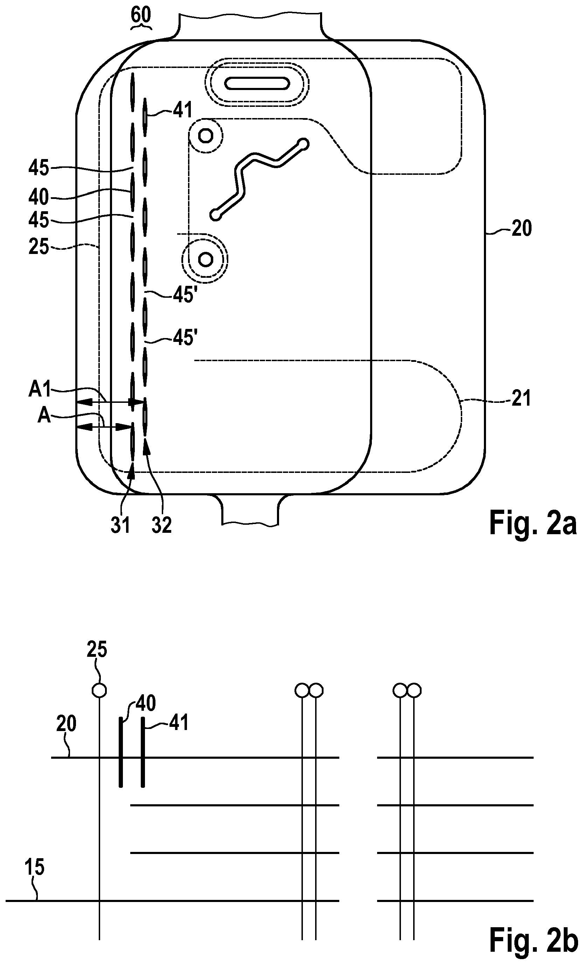

In Fig. 2a ist das Verstärkungspanel 20 detaillierter dargestellt. Zu erkennen ist eine gestrichelt dargestellte Nahtkontur 21. Der längste Abschnitt der Nahtkontur 21 ist die geradlinige Verbindungsstelle 25. Diese Verbindungsstelle 25 ist parallel zur Längsachse L (siehe Darstellung Fig. 1) ausgebildet. In einem Abstand A zu der Verbindungsstelle 25 ist eine erste Reihe 31 mit Entlastungsaussparungen 40 ausgebildet. Die Entlastungsaussparungen 40 sind in Form von länglichen Schnitten ausgebildet. In der ersten Reihe 31 sind acht Entlastungsaussparungen, insbesondere Entlastungseinschnitte, ausgebildet.

Mit einem etwas im Vergleich zum Abstand A größeren Abstand A1 ist eine zweite Reihe 32 mit Entlastungsaussparungen 41 ausgebildet. Die zweite Reihe 32 umfasst insbesondere sieben Entlastungsaussparungen 41. Die Entlastungsaussparungen 41 weisen die gleiche Form wie die Entlastungsaussparungen 40 auf. Die Entlastungsaussparungen 41 sind in Form von länglichen Entlastungseinschnitten ausgebildet. Zwischen den Entlastungaussparungen 40 bzw. 41 einer Reihe 31 bzw. einer Reihe 32 sind jeweils Verbindungsabschnitte 45 und 45' ausgebildet. Diese Verbindungsabschnitte 45 und 45' sind also nicht eingeschnitten bzw. weisen keine Entlastungsaussparung auf.

Die Entlastungsaussparungen 41 der zweiten Reihe 32 sind versetzt zu den Entlastungsaussparungen 40 der ersten Reihe 31 ausgebildet. Insbesondere befindet sich versetzt zu den Verbindungsabschnitten 45 der ersten Reihe 31 jeweils eine Entlastungsaussparung 41 der zweiten Reihe 32. Die Entlastungsaussparungen 41 der zweiten Reihe 32 sind in Relation zu den Verbindungsabschnitten 45 der ersten Reihe überlappend angeordnet. D.h., dass teilweise Abschnitte der Entlastungsaussparungen 41 der zweiten Reihe 32 parallel zu Entlastungsaussparungen 40 der ersten Reihe 31 ausgebildet sind. Die Längsachse L des Gassackpanels 15 entspricht einem späteren Faltungsabschnitt 50 des herstellenden Gassacks 10. Die Verbindungsstelle 25 ist somit parallel zu dem Faltungsabschnitt 50 des Gassacks 10 ausgebildet.

Zwischen der ersten Reihe 31 und der zweiten Reihe 32 ist ein Abstandsbereich 33 ausgebildet, der keine Entlastungsaussparungen aufweist. Der Abstandsbereich 33, die erste Reihe 31 und die zweite Reihe 32 bilden einen Verlängerungsbereich 60. Im Verlängerungsbereich 60 kann im Aktivierungsfall des Gassacks 10 eine Verlängerung des Stoffes des Verstärkungspanels 20 stattfinden. Dadurch wird die Last auf die Verbindungsstelle 25 verringert. Die Verbindungsstelle 25 reißt demnach im Aktivierungsfall nicht ein.

In Fig. 2b ist der Querschnitt durch den Aufbau eines Gassacks 10 dargestellt. Das Verstärkungspanel 20 ist oberhalb des Gassackpanels 15 ausgebildet. Das Verstärkungspanel 20 ist über die Verbindungsstelle 25 mit dem Gassackpanel 15 verbunden. Es ist zu erkennen, dass lediglich im Verstärkungspanel 20 Entlastungsaussparungen 40 und 41 ausgebildet sind.

Im Gassackpanel 15 sind keine Entlastungsaussparungen ausgebildet. Der erfindungsgemäße Gassack 10 ist dadurch gekennzeichnet, dass lediglich im Verstärkungspanel 20 mindestens eine Entlastungsaussparung, vorzugsweise mehrere Entlastungsaussparungen, die insbesondere in mindestens zwei Reihen angeordnet sind, ausgebildet ist/sind.

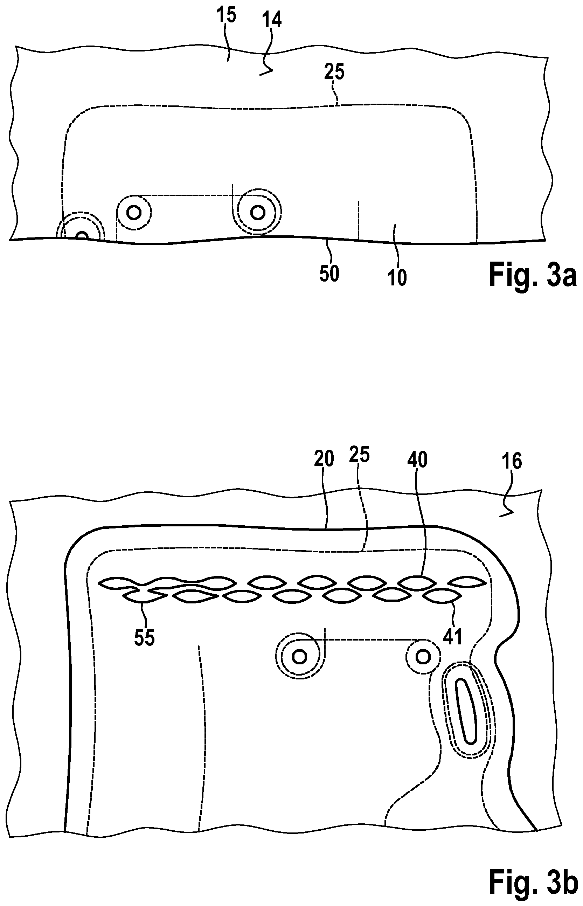

In Fig. 3a ist ein Gassack 10 im teilweise gefalteten Zustand dargestellt. Es ist der Faltungsabschnitt 50 dargestellt. In Fig. 3a liegt der Gassack 10 nach einem Aktivierungsfall vor. Es ist zu erkennen, dass weder das Gassackpanel 15, wobei in Fig. 3a die Außenseite 14 des Gassackpanels 15 dargestellt ist, noch die Verbindungsstelle 25 Zerstörungen aufweisen und/oder gerissen sind.

In Fig. 3b ist die Innenseite 16 des Gassackpanels 15 sowie das Verstärkungspanel 20 dargestellt. Auch in diesem Zusammenhang ist zu erkennen, dass die Verbindungsstelle 25 nicht gerissen ist. Die Entlastungsaussparungen 40 und 41 der ersten Reihe 31 und der zweiten Reihe 32 sind im Vergleich zu der Darstellung gemäß Fig. 2a nach dem Aktivierungszustand vergrößert. Teilweise sind die Verbindungsabschnitte 45, 45' noch erhalten. Gerade im linken Bereich des Verstärkungspanels 20 sind die Verbindungsabschnitte 45, 45' teilweise durchgerissen, so dass ein größerer Öffnungsbereich 55 entsteht.

Im Bereich der ersten Reihe 31, der zweiten Reihe 32 sowie dem dazwischen befindlichen Abstandsbereich 33 hat eine Verlängerung des Stoffes des Verstärkungspanels 20 stattgefunden. Dadurch wird die Last auf die Verbindungsstelle 25 verringert. Die Verbindungsstelle 25 reißt demnach nicht ein. Durch das gerissene Verstärkungspanel 20 tritt kein oder nur ein sehr geringer Anteil von Gas während des Aktivierungsfalls aus.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Gassack
- 14: Außenseite
- 15: Gassackpanel
- 16: Innenseite
- 17: Seitenkante
- 18: Seitenkante
- 19, 19': Gassackpanel-Abschnitt
- 20: Verstärkungspanel
- 21: Nahtkontur
- 25: Verbindungsstelle
- 31: erste Reihe
- 32: zweite Reihe
- 33: Abstandsbereich
- 40: Entlastungsaussparung
- 41: Entlastungsaussparung
- 45, 45': Verbindungsabschnitt
- 50: Faltungsabschnitt
- 55: Öffnungsbereich
- 60: Verlängerungsbereich
- A: Abstand
- A1: Abstand
- L: Längsachse Gassackpanel

## Patentansprüche

1. Gassack (10), umfassend
mindestens ein Gassackpanel (15) und
mindestens ein Verstärkungspanel (20),
wobei das Verstärkungspanel (20) mit dem Gassackpanel (15) verbunden, insbesondere vernäht, ist,
**dadurch gekennzeichnet, dass** lediglich im Verstärkungspanel (20), nicht jedoch im Gassackpanel (15), in einem Abstand (A) zu mindestens einer Verbindungsstelle (25) des Verstärkungspanels (20) mit dem Gassackpanel (15), mindestens zwei Reihen mit Entlastungsaussparungen (40) ausgebildet sind, wobei die Entlastungsaussparungen (41) einer zweiten Reihe (32) versetzt zu den Entlastungsaussparungen (40) einer ersten Reihe (31) verlaufen.

2. Gassack (10) nach Anspruch 1, **dadurch gekennzeichnet, dass** mehrere Entlastungsaussparungen (40, 41), die vorzugsweise in mindestens einer Reihe (31, 32) angeordnet sind, ausgebildet sind.

3. Gassack (10) nach Anspruch 1 oder 2, **dadurch gekennzeichnet, dass** die Entlastungsaussparung (40, 41), insbesondere die in einer Reihe angeordneten Entlastungsaussparungen, parallel zur Verbindungsstelle (25) ausgebildet ist/sind.

4. Gassack (10) nach einem der vorhergehenden Ansprüche, **dadurch gekennzeichnet, dass** die Reihen (31, 32) parallel zueinander verlaufen und/oder die Reihen (31, 32) parallel zur Verbindungsstelle (25) verlaufen.

5. Gassack (10) nach einem der vorhergehenden Ansprüche, **dadurch gekennzeichnet, dass** die Verbindungsstelle (25) parallel zu einem Faltungsabschnitt (50) des Gassacks (10), insbesondere parallel zu einem Faltungsabschnitt (50) des Gassackpanels (15), verläuft.

6. Gassack (10) nach einem der vorhergehenden Ansprüche, **dadurch gekennzeichnet, dass** der Gassack als Thoraxairbag, Knieairbag, Fahrerfrontairbag, Beifahrerfrontairbag, Seitenkopfairbag, oder Far-Side-airbag ausgebildet ist.

7. Gassackmodul mit einem Gassack (10) nach einem der Ansprüche 1 bis 6 und einer Strömungsmittelquelle zum Aufblasen des Gassackes.

8. Fahrzeugsicherheitssystem mit einem Gassack (10) nach einem der Ansprüche 1 bis 6 und/oder mit einem Gassackmodul nach Anspruch 7 und zumindest einer Sensoreinheit zum Erfassen von Daten sowie einer elektronischen Entscheidungseinheit, die geeignet ist, unter Einbeziehung der von der Sensoreinheit erfassten Daten das Vorliegen eines Auslösefalles für das Gassackmodul zu definieren und/oder ein Auslösesignal an das Gassackmodul zu senden.

9. Verfahren zur Herstellung eines Gassacks gemäß einem der Ansprüche 1 bis 6, **gekennzeichnet durch** folgende Verfahrensschritte:
a) Einbringen mindestens einer Entlastungsaussparung (40) lediglich in das Verstärkungspanel (20), nicht jedoch in das Gassackpanel (15),
b) Verbinden des Verstärkungspanels (20) mit dem Gassackpanel (15),
c) Verbinden von Abschnitten des Gassackpanels (15).

10. Verfahren gemäß Anspruch 9, **dadurch gekennzeichnet, dass** das Einbringen der mindestens einen Entlastungsaussparung (40) mittels Laserschneiden oder mittels Stanzen erfolgt.

11. Verfahren gemäß Anspruch 9 oder 10, **dadurch gekennzeichnet, dass** das Verstärkungspanel (20) mit dem Gassackpanel (15) vernäht oder verschweißt wird.

12. Verfahren gemäß einem der Ansprüche 9 bis 10, **dadurch gekennzeichnet, dass** das Gassackpanel (15) zusammen mit dem Verstärkungspanel (20) zusammengelegt, insbesondere gefaltet und/oder eingerollt wird.

## Claims

1. An airbag (10) comprising
at least one airbag panel (15) and
at least one reinforcing panel (20),
wherein the reinforcing panel (20) is joined, especially sewn, to the airbag panel (15),
**characterized in that** merely in the reinforcing panel (20), but not in the airbag panel (15), at least two rows of relief recesses (40) are formed at a distance (A) from at least one joint (25) of the reinforcing panel (20) with the airbag panel (15), wherein the relief recesses (41) of a second row (32) extend offset against the relief recesses (40) of a first row (31).

2. The airbag (10) according to claim 1, **characterized in that** plural relief recesses (40, 41) preferably being arranged in at least one row (31, 32) are formed.

3. The airbag (10) according to claim 1 or 2, **characterized in that** the relief recess (40, 41), especially the relief recesses arranged in a row is/are formed in parallel to the joint (25).

4. The airbag (10) according to any one of the preceding claims, **characterized in that** the rows (31, 32) extend in parallel to each other and/or the rows (31, 32) extend in parallel to the joint (25).

5. The airbag (10) according to any one of the preceding claims, **characterized in that** the joint (25) extends in parallel to a folding portion (50) of the airbag (10), especially in parallel to a folding portion (50) of the airbag panel (15).

6. The airbag (10) according to any one of the preceding claims, **characterized in that** the airbag is in the form of a thorax airbag, knee airbag, driver front airbag, front passenger airbag, side head airbag or far-side airbag.

7. An airbag module comprising an airbag (10) according to any one of the claims 1 to 6 and a fluid source for inflating the airbag.

8. A vehicle safety system comprising an airbag (10) according to any one of the claims 1 to 6 and/or comprising an airbag module according to claim 7 and at least one sensor unit for detecting data as well as an electronic decision-making unit which is suitable, with consideration of the data detected by the sensor unit, for defining the presence of a trigger case for the airbag module and/or for sending a trigger signal to the airbag module.

9. A process for manufacturing an airbag according to any one of the claims 1 to 6, **characterized by** the following steps:
a) introducing at least one relief recess (40) merely into the reinforcing panel (20) but not into the airbag panel (15),
b) joining the reinforcing panel (20) to the airbag panel (15),
c) joining portions of the airbag panel (15).

10. The process according to claim 9, **characterized in that** the introduction of the at least one relief recess (40) is carried out by means of laser cutting or stamping.

11. The process according to claim 9 or 10, **characterized in that** the reinforcing panel (20) is sewn or welded to the airbag panel (15).

12. The process according to any one of the claims 9 to 10, **characterized in that** the airbag panel (15) is laid, especially folded and/or rolled, together with the reinforcing panel (20).

## Revendications

1. Coussin gonflable (10) comprenant au moins un panneau de coussin gonflable (15) et au moins un panneau de renforcement (20),
pour lequel le panneau de renforcement (20) est relié avec le panneau de coussin gonflable (15), en particulier cousu, est
**caractérisé en ce que**, seulement dans le panneau de renforcement (20), mais pas dans le panneau de coussin gonflable (15), à une distance (A) d'au moins un point de liaison (25) du panneau de renforcement (20) avec le panneau de coussin gonflable (15), sont formées au moins deux rangées avec des évidements de décharge (40), pour lequel les évidements de décharge (41) d'une deuxième rangée (32) sont décalés par rapport aux évidements de décharge (40) d'une première rangée (31).

2. Coussin gonflable (10) selon la revendication 1, **caractérisé en ce que** sont réalisés plusieurs évidements de décharge (40, 41) qui sont de préférence disposés sur au moins une rangée (31, 32).

3. Coussin gonflable (10) selon la revendication 1 ou 2, **caractérisé en ce que** les évidements de décharge (40, 41), en particulier les évidements de décharge disposés dans une rangée, laquelle est parallèle aux points de liaison (25).

4. Coussin gonflable (10) selon l'une quelconque des revendications précédentes, **caractérisé en ce que** les rangées (31, 32) sont parallèles les unes aux autres et / ou les rangées (31, 32) courent parallèlement aux point s de liaison (25).

5. Coussin gonflable (10) selon l'une quelconque des revendications précédentes, **caractérisé en ce que** les points de liaison (25) sont parallèles à une partie pliante (50) du coussin gonflables (10), en particulier parallèles à une partie pliante (50) du panneau de coussin gonflable (15).

6. Coussin gonflable (10) selon l'une des revendications précédentes, **caractérisé en ce que** le coussin gonflable est conçu comme un airbag thorax, un airbag genou, un airbag frontal conducteur, un airbag frontal passager, un airbag latéral de tête ou un airbag latéral éloigné.

7. Module airbag avec un coussin gonflable(10) selon l'une quelconque des revendications 1 à 6 et une source de fluide pour gonfler l'airbag.

8. Système de sécurité de véhicule avec coussin gonflable (10) selon l'une quelconque des revendications 1 à 6 et/ou avec un module de coussin gonflable selon la revendication 7 et au moins une unité de capteur pour détecter des données ainsi qu'une unité de décision électronique, laquelle est adaptée, selon les données détectées par l'unité de capteur pour définir la présence d'un cas de déclenchement du module airbag et/ou envoyer un signal de déclenchement au module airbag.

9. Procédé de fabrication d'un airbag selon l'une des revendications 1 à 6, **caractérisé par** les étapes de procédé suivantes:
a) introduire au moins un évidement de décharge (40) uniquement dans le panneau de renforcement (20), mais pas dans le panneau de coussin gonflable(15),
b) relier le panneau de renforcement (20) au panneau de coussin à gaz (15),
c) relier les parties du panneau de coussin gonflable (15).

10. Procédé selon la revendication 9, **caractérisé en ce qu'**on introduit au moins un évidement de décharge (40) au moyen d'une découpe au laser ou d'un poinçonnage.

11. Procédé selon la revendication 9 ou 10, **caractérisé en ce que** le panneau de renforcement (20) est cousu ou soudé avec le panneau de coussin gonflable (15).

12. Procédé selon l'une quelconque des revendications 9 à 10, **caractérisé en ce que** le panneau de coussin gonflable(15) ainsi que le panneau de renforcement (20) sont réunis ensemble, en particulier sont pliés et / ou enroulés.
